# EUROPEAN PATENT APPLICATION

(11) **EP 4 685 453 A1**
(43) Date of publication of application: **28.01.2026**
(21) Application number: 24190339.2
(22) Date of filing: 23.07.2024
(51) Int. Cl.: G01N 1/28

(54) **LASER MICRODISSECTION SYSTEM AND METHOD**

(71) Applicant: Leica Microsystems CMS GmbH, 35578 Wetzlar (DE)
(72) Inventor: Schlaudraff, Falk, 35578 Wetzlar (DE); Hoffmann, Florian, 35578 Wetzlar (DE); Marr, James, 35578 Wetzlar (DE)
(74) Representative: Schaumburg und Partner Patentanwälte mbB

(57) **Abstract**

A laser microdissection system (100) comprises a microscope (110) having an objective (114) directed at a sample space (120), and a laser light source (126) configured to generate a manipulation light beam. The laser microdissection system (100) also comprises a dissection unit (134) configured to couple the manipulation light beam into the microscope (110), and to separate a dissectate (104) from a sample (102) arranged in the sample space (120) by directing the manipulation light beam onto the sample (102) according to outline data relating to an outline (304) on the sample (102) surrounding the dissectate (104). The laser microdissection system (100) also comprises a well positioning unit (138) configured to move a collection arrangement (108) comprising at least one well (106) arranged below the sample (102) relative to an optical axis of the objective (114), wherein the well (106) is configured to capture the dissectate (104). The laser microdissection system (100) further comprises a controller (140) configured to control the well positioning unit (138) to move the collection arrangement (108) based on the outline data such that a center (302) of an opening of the well (106) is arranged below the dissectate (104).

## Description

### Technical field

The invention relates to a laser microdissection system. The invention further relates to a method for laser microdissection.

### Background

A laser microdissection system uses laser light focused through the objective of a microscope to separate a small portion, called a dissectate, from a sample. The sample may be a thin tissue section, for example, that is cut in order to isolate specific cells or other microscopic regions of interest. The separated dissectate is then captured by a collection arrangement for further processing. The collection arrangement may comprise one or more wells to collect the dissectate. When the dissectates is separated, it is essential that the dissectate falls into the intended well and does not become stuck to a wall of the well.

### Summary

It is an object to provide a laser microdissection system and a method for laser microdissection, which enable the collection of dissectates with high precision and reliability.

The aforementioned object is achieved by the subject-matter of the independent claims. Advantageous embodiments are defined in the dependent claims and the following description.

The proposed laser microdissection system comprises a microscope having an objective directed at a sample space, and a laser light source configured to generate a manipulation light beam. The laser microdissection system also comprises a dissection unit configured to couple the manipulation light beam into the microscope, and to separate a dissectate from a sample arranged in the sample space by directing the manipulation light beam onto the sample according to outline data relating to an outline on the sample surrounding the dissectate. The laser microdissection system also comprises a well positioning unit configured to move a collection arrangement comprising at least one well arranged below the sample relative to an optical axis of the objective. The well is configured to capture the dissectate. The laser microdissection system further comprises a controller configured to control the well positioning unit to move the collection arrangement based on the outline data such that a center of an opening of the well is arranged below the dissectate.

The microscope may comprise an optical detection system configured to generate images of the sample. The objective of the microscope may be used to focus the manipulation light beam in the sample space. For example, the manipulation light beam may be focused by the objective onto the sample in order to cut the dissectate from the sample. The manipulation light beam may also be focused to a plane above or below the sample, such that the manipulation light beam is defocused with respect to the sample. A short pulse of defocused manipulation light may be used to tear the dissectate from the sample using radiation pressure, thereby separating it. A short, defocused laser pulse may also be used to catapult the dissectate into the well, for example if the dissectate is still stuck to the sample after cutting. The separated dissectate may then fall into the well under the influence of gravity.

The collection arrangement may comprise more than one well. For example, the collection arrangement may comprise a multiwell plate comprising 6, 12, 24, 48, 96, 384, 1536, or 3456 wells. The collection arrangement may also comprise one or more vessels, for example PCR-tubes with or without snap-on lids, or Petri dishes, each vessel forming a well.

In order to collect the dissectate in the well, the well is positioned by the controller controlling the well positioning unit before the dissectate is separated. The well is positioned such that the center of the opening of the well is positioned under the dissectate based on the outline data. In other words, when looking from above, for example through an objective of the microscope that is directed at the sample, the dissectate appears to cover the center of the opening of the well. This arrangement ensures that the separated dissected falls or is catapulted close to an area at the bottom of the well that is close to the center of the well, regardless of where the dissectate is located in the field of view of the microscope. Thereby, for example, it is prevented that the dissectate is stuck to a wall of the well or the dissectate is not collected in the well at all. The proposed laser microdissection system thereby enables the collection of dissectates with high precision and reliability.

In an embodiment, the controller is configured to control the dissection unit to cut the sample along the outline after the well has been positioned. In this embodiment, the dissectate is separated from the sample at least in part by cutting the sample along the outline using the manipulation light. For this, the manipulation light beam may be moved along the outline while the sample remains stationary. It is also possible to move the sample while the manipulation light beam remains stationary or to move both the sample and the manipulation light beam. Cutting the sample allows the dissectate to be separated from the sample with high precision.

In another embodiment, the controller is configured to determine an area of the sample enclosed by the outline based on the outline data, and to control the well positioning unit to move the collection arrangement such that the center of the opening of the well is arranged below the area of the sample enclosed by the outline. If the outline is not closed, the controller may determine a closed outline based on the outline data first, for example by connecting two end points of the open outline. In this embodiment, the collection arrangement is positioned such that, when looking from above, for example through the objective of the microscope that is directed at the sample, the center of the opening of the well appears within the area of the sample enclosed by the outline. This ensures that the dissectate can be reliably collected with high precision.

In another embodiment, the controller is configured to determine a center of the outline based on the outline data, and to control the well positioning unit to move the collection arrangement such that the center of an opening of the well is arranged below the center of the center of the outline. The controller may be configured to determine the center of the outline, for example by determining the geometrical center of a set formed from a number of points defined by the outline. In this embodiment, the collection arrangement is positioned such that, when looking from above, for example through the objective of the microscope that is directed at the sample, the center of the opening of the well appears directly above the center of the outline. In other words, there is a line that is parallel to the optical axis of the objective and that connects the center of the center of the opening of the well with the center of the outline. This ensures that the dissectate can be reliably collected with high precision. The center of the outline may also be determined based on a surrounding rectangle or a surrounding circle of the outline, for example by determining the geometrical center of the surrounding rectangle or a surrounding circle as the center of the outline.

In another embodiment, the laser microdissection system comprises a sample positioning unit configured to move the sample relative to the optical axis of the objective. The sample positioning unit may comprise a movable microscope stage, for example an x-y stage. The sample positioning unit makes it possible to position the sample within the field of view of the objective. Further, the sample positioning unit makes it possible to precisely position the sample and the collection arrangement relative to each other, enabling the collection of the dissectate with high precision.

In another embodiment, the controller is configured to control the sample positioning unit to move the sample based on the outline data. For example, based on the outline data an area of the sample from which the dissectate is to be generated can be brought into the field of view of the objective. If the manipulation light beam is stationary, the sample may be moved using the sample positioning unit in order to cut the dissectate in a table saw like manner.

In another embodiment, the cutting unit comprises a scanning unit configured to move the manipulation light beam within a field of view of the objective. In such an embodiment, it is possible to leave the sample stationary, and to move the manipulation light beam over the specimen with minimal effort using the scanning unit. This reduces the number of moving parts of the laser microdissection unit, and thus increases the precision with which the dissectates can be separated from the sample.

In another embodiment, the scanning unit comprises two prisms which are arranged rotatably around an optical axis between the laser light source and the objective. The optical axis here is the optical axis of the objective or extension thereof, for example via a beam splitter. Each of the prisms deflects the manipulation light depending on the rotation of the prism. The beam deflection caused by each of the prisms add up vectorially. Thus, by rotating the two prisms, the manipulation light beam can be moved inside the field of view of the objective. In particular, the rotation of the prisms also causes a change of the beam offset at the output of the scanning unit. This beam offset compensates for the lateral deflection of the manipulation light beam, which is otherwise generated in the plane of the objective pupil. As a result, the manipulation light beam always passes through the pupil of the objective regardless of the deflection angle. In the present embodiment, it is possible to leave the sample stationary, and to move the manipulation light beam over the specimen with minimal effort.

In an embodiment, the scanning unit may also comprise at least one of a scanning mirror device and a spatial light modulator, such as a digital mirror device. The scanning mirror device and the spatial light modulator may each be configured to achieve at least a comparable functionality compared to the scanning unit comprising the two prisms.

In another embodiment, the laser light source comprises at least one pulsed laser. The pulsed laser generates pulsed laser light from which the manipulation light beam may be formed. Pulsed laser light comprises a series of laser light pulses interrupted by intervals in which no laser light is emitted. The duration of the intervals in which no laser light is emitted may be adjustable. The at least one pulsed laser may be configured to generate pulsed laser light. A manipulation light beam form from such pulsed laser light may be used to cut the sample in a way that is non-damaging to the remaining sample. Further, the at least one pulsed laser may be controlled to generate short laser pulses. Such short laser pulses may be formed into a manipulation light beam that is defocused with respect to the sample. Such a manipulation light beam may be used to tear the dissectate from the sample using the radiation pressure exerted by the manipulation light beam on the sample.

In another embodiment, the laser light source comprises at least one UV-laser-light source. The UV-laser-light source is configured to generate UV-laser-light from which the manipulation light beam is formed. UV-laser-light has a short wavelength, which enables high precision cuts and reduces the likelihood of heat diffusion, thereby minimizing damage to areas adjacent to the dissectate.

In another embodiment, the laser microdissection system comprises an input unit configured to receive a user input. The controller may be configured to generate the outline data based on the user input. The input unit may for example be a keyboard and/or mouse used in combination with a monitor or other display device configured to display an image of the sample. In this embodiment, a user may determine regions of the sample from which the dissectates are generated using the laser microdissection system itself instead of an external device. This makes the laser microdissection system self-sufficient. Further, since the outline data is generated by the laser microdissection system itself, no postprocessing is needed to adapt the outline data to the laser microdissection system, making the sample manipulation device even easier to use.

In another embodiment, the controller is configured to receive the outline data via at least one of a data storage device and a computer network. In this embodiment, the laser microdissection device is configured to receive the outline data from an external source. For example, the outline data may be generated using an image analysis software running on external hardware such as a personal computer, a server, or a cloud service. The controller may be configured to adapt the external outline data to the laser microdissection device, for example by changing the format of the outline data. Being able to use outline data generated by an external source makes the laser microdissection device more versatile.

In another embodiment, the controller is configured to generate the outline data based on images captured with the microscope. For example, the controller may be configured to perform semantic segmentation of the images in order to generate the outline data. For example, certain areas may be determined to be a specific type of cell that is to be isolated from the rest of the sample. The result of the image segmentation may then be used to determine potential dissectates to be separated from the sample. In such an embodiment, the laser microdissection device is configured to generate the outline data itself. This greatly aids the user in determining potential dissectates, thereby facilitating the automation of many workflows involving the laser microdissection device. Further, since the outline data is generated by the laser microdissection system itself, there is no need to - manually or automatically - adapt the outline data to the laser microdissection device, making the laser microdissection device easier to use.

In another embodiment, the controller is configured to generate the outline data using machine learning. For example, the controller may be configured to perform the semantic segmentation using machine learning in order to determine potential dissectates. Machine learning methods are capable of extracting features fast even from complex scenes, such as the microscopic images of the sample. Thus, the use of machine learning can greatly aid the determination of potential dissectates, and thereby improve the ease of use of the laser microdissection device.

The invention further relates to a method for laser microdissection. The method comprises the following steps: a) Providing outline data relating to an outline on a sample surrounding a dissectate to be separated from the sample. b) Providing a collection arrangement comprising at least one well arranged below the sample. c) Positioning the collection arrangement based on the outline data such that a center of an opening of the well is arranged below the dissectate. d) Separating a dissectate from the sample by directing the manipulation light beam onto the sample according to the outline data. e) Capturing the dissectate using the well of the collection arrangement.

Steps a) to e) may be repeated in order to separate plurality of dissectates from the sample. The method has the same advantages as the laser microdissection system described above. In particular, the method may be supplemented with the features described in this document in connection with the laser microdissection system. Furthermore, the laser microdissection system described above may be supplemented with the features described in this document in connection with the method.

In an embodiment, the outline data comprises at least two outlines on the sample, the collection arrangement comprises at least two wells. The steps c) to e) may be repeated consecutively for each of the outlines on the sample using different wells of the collection arrangement to capture the respective dissectate. In this embodiment, two or more dissectates are separated from the sample - one for each of the at least two outlines. Each dissectate is assigned one of the wells of the collection arrangement. For each dissectate, the assigned well is positioned under the sample before the respective dissectate is separated from the sample. The separated dissectate is then captured in the assigned well. Such an embodiment of the method enables the collection of multiple dissectates from a single sample with high precision and reliability.

### Short Description of the Figures

Hereinafter, specific embodiments are described referring to the drawings, wherein:
- Figure 1: is a schematic view of a laser microdissection system according to an embodiment;
- Figure 2: is a flow chart of a method for laser microdissection according to an embodiment; and
- Figures 3a and 3b: are schematic views of a field of view of an objective and illustrate a step of the method according to Figure 2.

### Detailed Description

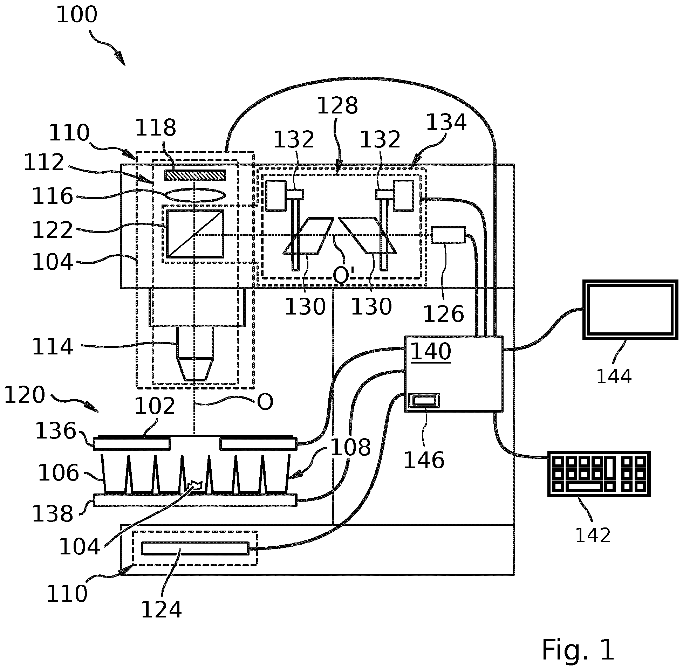

Figure 1 is a schematic view of a laser microdissection system 100 according to an embodiment. The laser microdissection system 100 is configured to separate small portions of a sample 102, called dissectates 104 in the following, and to collect them in wells 106 of a collection arrangement 108 arranged below the sample 102. The sample 102 may be a biological sample, such as a tissue section, arranged on a membrane on a metal frame, for example. Specific cells or other microscopic regions of interest may be separated from the sample 102 and collected as the dissectates 104.

In Figure 1, the collection arrangement 108 is exemplary shown as a multiwell plate. The wells 106 of the collection arrangement 108 may also be formed by PCR-tubes that may be arranged in a frame to facilitate easy handling, by one or more Petri-dishes, or by similarly suited vessels. The collection arrangement 108 and/or individual wells 106 may be removable, allowing the dissectates 104 to be further processed.

The laser microdissection system 100 comprises a microscope 110 having an optical detection system 112 for capturing images of the sample 102. The optical detection system 112 comprises an objective 114, a tube lens 116, and a detector 118. Further optical elements, such as lenses, filters, and apertures, may be part of the optical detection system 112. The objective 114 is directed at a sample space 120 in which the sample 102 is arranged. The objective 114 is further configured to receive detection light from the sample 102. The detection light is directed by the objective 114 towards the detector 118 via the tube lens 116. The detector 118 is configured to generate the images of the sample 102 from the detection light. In the present embodiment, a beam splitter 122 is arranged between the objective 114 and the tube lens 116. The beam splitter 122 is configured to direct the detection light towards the detector 118 via the tube lens 116. The beam splitter 122 may be a dichroic beam splitter, for example. An illumination system 124 is also part of the microscope 110 and configured for illuminating the sample 102. The illumination system 124 is exemplary arranged below the sample 102. The illumination system 124 may also be arranged above the sample 102 and be configured for incident light illumination. The microscope 110 may further be configured to illuminate the sample 102 via the objective 114.

The laser microdissection system 100 further comprises a laser light source 126 configured to generate a manipulation light beam. The laser light source 126 may comprise one or more pulsed lasers for generating pulsed laser light from which the manipulation light beam is formed. The manipulation light beam is focused into the sample space 120 by the objective 114. Using the manipulation light beam the dissectates 104 can be separated from the sample 102, for example by cutting the dissectates 104 from the sample 102 using a focused beam, or by tearing the dissectates 104 from the sample 102 using a defocused beam. In the present embodiment, the manipulation light beam is directed into the objective 114 via the beam splitter 122 which is arranged in a beam path between the laser light source 126 and the objective 114. The beam splitter 122 splits a main beam path originating at the sample 102 into two distinct beam paths, one beam path extending towards the detector 118 and another beam path extending to the laser light source 126. Thereby, the beam splitter 122 allows the objective 114 to be used for both imaging and separating the dissectates 104.

In order to move the manipulation light beam in the sample space 120, the laser microdissection system 100 comprises a scanning unit 128. The scanning unit 128 is arranged between the laser light source 126 and the objective 114. In the present embodiment, the scanning unit 128 comprises two prisms 130 arranged in the beam path between the laser light source 126 and the beam splitter 122. The two prisms 130 are arranged rotatable around the optical axis O' of said beam path and configured to deflect the manipulation light beam depending on their rotation. Thus, by rotating the two prisms 130, the manipulation light beam can be moved relative to the sample 102 inside the field of view of the objective 114. The scanning unit 128 further comprises a drive unit 132 for each of the two prisms 130. The two drive units 132 are configured to rotate the prisms 130 independently of each other. In the present embodiment, the beam splitter 122 and the scanning unit 128 form a dissection unit 134 of the laser microdissection system 100 that is configured to couple the manipulation light beam into the microscope 110 using the beam splitter 112, and to move the manipulation light beam in the sample space 120 using the scanning unit 128.

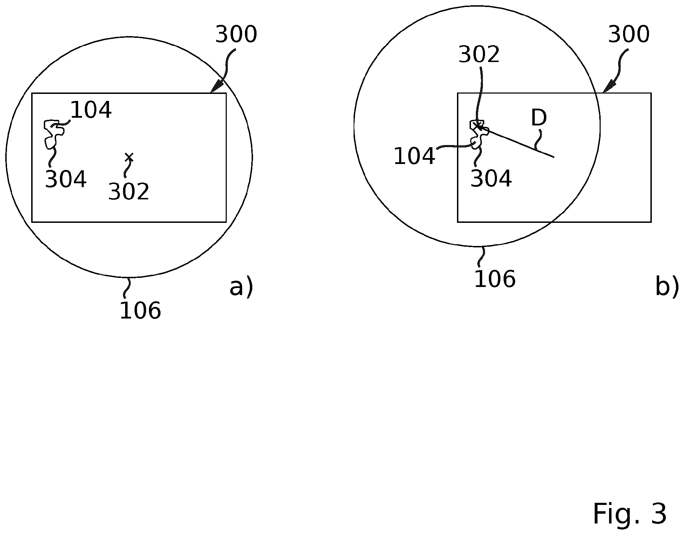

The sample 102 is arranged in the sample space 120 on a sample positioning unit 136 of the laser microdissection system 100. In Figure 1, the sample positioning unit 136 is exemplary formed as a microscope stage having an opening, which allows the dissectates 104 to fall into the wells 106 of the collection arrangement 108 under the influence of gravity. The sample positioning unit 136 is configured to move the sample 102 relative to an optical axis O of the objective 114. In particular, the sample positioning unit 136 is configured to move the sample 102 in a plane perpendicular to the optical axis O of the objective 114, i.e. in the x- and y-directions, and may also be configured to move the sample 102 in the direction of the optical axis O, i.e. in the z-direction. By means of the sample positioning unit 136, the sample 102 can be automatically and precisely positioned in a field of view 300 (c.f. Figure 3) of the objective 114. Thereby, a specific area of the sample 102 from which one or more dissectates 104 are to be removed can be brought into the field of view 300.

The laser microdissection system 100 also comprises a well positioning unit 138. The well positioning unit 138 is configured to move the collection arrangement 108 relative to the body of the laser microdissection system 100. In particular, the well positioning unit 138 is configured to move the collection arrangement 108 relative to the optical axis O of the objective 114, i.e. in the x- and y-directions. Using the well positioning unit 138 one of the wells 106 of the collection arrangement 108 may be positioned such under the sample 102 that dissectates 104 cut from the sample 102 may be collected in said well 106.

The laser microdissection system 100 further comprises a controller 140, an input unit 142, and an output unit 144. The controller 140 is configured to receive a user input via the input unit 142, and to display visual information to the user via the output unit 144. The input unit 142 is exemplary shown to comprise a keyboard.

However, the input unit 142 may also comprise a computer mouse, a stylus for use with a touch screen, or other suitable input devices. The output unit 144 is exemplary shown as a monitor. The input unit 142 and the output unit 144 may also be a single element, for example a touch screen. The controller 140 further comprises an external interface 146 and is configured to receive data via the external interface 146. The external interface 146 may comprise a connector for a storage device, for example a flash drive, and/or a connection to a computer network, such as a local area network or the internet.

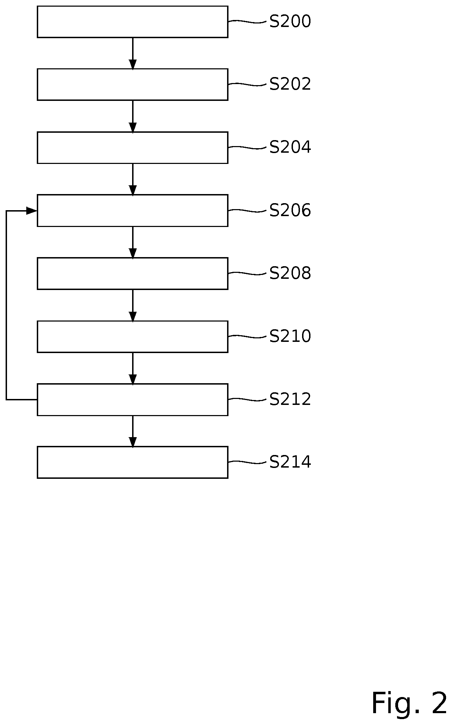

Further, the controller 140 is configured to perform at least some steps of a method for laser microdissection. In order to perform the method, the controller 140 is configured to control at least the well positioning unit 138. The controller 140 may be configured to also control at least one of the following elements: the optical detection system 112, the illumination system 124, the laser light source 126, the scanning unit 128, and the sample positioning unit 136. The method will be described in more detail below with reference to Figures 2, 3a, and 3b.

Figure 2 is a flow chart of the method for laser microdissection according to an embodiment. The method is described as being performed using the laser microdissection system 100 according to Figure 1 as an example only.

The method is started in step S200. In step S202, outline data is provided. The outline data relates to at least one outline 304 (c.f. Figure 3) on the sample 102, which surrounds a dissectate 104 that is to be separated from the sample 102. The outline data may be generated based on a user input. In an embodiment, a user may draw an outline around an area of the sample 102 on an image of the sample 102 using the input unit 142. The image of the sample 102 may be displayed to the user via the output unit 144. From the outline drawn by the user on the image of the sample 102, the outline data may be generated by the controller 140, for example. The image of the sample 102 is an image captured by the microscope 110, for example. The controller 140 may also generate the outline data using image processing methods, for example image segmentation, on the image of the sample 102. The outline data may also be generated by an external source. For example, the outline data is generated on an external device and transferred to the laser microdissection system 100 via the external interface 146. In step 204, the collection arrangement 108 is provided. In this step, the collection arrangement 108 may be positioned manually by a user or automatically, for example by a robotic arm, in its intended position in the laser microdissection system 100. The collection arrangement 108 may also be a fixed part of the laser microdissection system 100, in which case the collection arrangement 108 is provided by the laser microdissection system 100. Steps S202 and S204 may be performed concurrently or consecutively in any order.

In the optional step S206, the sample 102 is positioned. For example, the sample 102 is positioned within the field of view 300 of the objective 114, such that the dissectate 104 which is to be separated from the sample 102 is visible in the field of view 300. In an embodiment, the controller 140 controls the sample positioning unit 136 to move the sample 102.

In step S208 the collection arrangement 108 is positioned under the sample 102 such that the center 302 (c.f. Figure 3) of an opening of one of the wells 106 is arranged below dissectate 104 surrounded by the outline 304. In other words, the collection arrangement 108 is moved such that the center 302 of the well 106 appears below the dissectate when looking from above, for example through the objective 114 along its optical axis O. In an embodiment, the controller 140 controls the well positioning unit 138 to move the collection arrangement 108. The positioning of the well 106 is described in more detail below with reference to Figures 3a and 3b.

In step S210, the dissectate 104 is separated from the sample 102 by directing the manipulation light beam onto the sample 102 in accordance with the outline data. In an embodiment, the sample 102 is cut along the outline 304 to separate the dissectate 104. For cutting the sample 102, the manipulation light beam may be focused onto the sample 102 using the objective 114. The focused manipulation light beam may then be moved along the outline 304 using the scanning unit 128. The dissectate 104 may also be separated from the sample 102 by tearing it from the sample 102 using the radiation pressure exerted by a short pulse of a defocused manipulation light beam. In step S212 the separated dissectate 104 is then captured in the well 106 of the collection arrangement 108 that has been arranged below the dissectate 104 in step S208.

Steps S206 to S212 may be repeated for different dissectates 104. Each time a different well 106 is arranged below a different dissectate 104 in step S208, and the current dissectate 104 is first separated and then collected in steps S210 and S212 respectively. The method is then ended in step S214.

Figures 3a and 3b are schematic views of the field of view 300 of the objective 114 and illustrate step S208 of the method according to Figure 2.

Figure 3a is a schematic view of the field of view 300 of the objective 114 before the collection arrangement 108 has been positioned, i.e. at the beginning of step S208. The opening of the well 106 is centered in the field of view 300 so that the center 302 of the opening is in the center of the field of view 300. The outline 304 surrounds the dissectate 104 that is located in the upper left corner of the field of view 300, and thus an upper left corner of the opening close to a wall of the well 106. If the dissectate 104 is separated in this position, the dissectate 104 may become stuck to the wall of the well 106.

Figure 3b is a schematic view of the field of view 300 of the objective 114 after the collection arrangement 108 has been positioned. The movement of the well 106 between the view of Figure 3a and Figure 3b is indicated by an arrow D. As can be seen in Figure 3b, the well 106 has been moved up and to the left. The center 302 of the opening is now located below the dissectate 104. More specifically, in Figure 3b, the center 302 of the opening is located within an area enclosed by the outline 304. In the field of view 300 of the objective 114 it appears like the dissectate 104 covers the center 302 of the opening. If the dissectate 104 is separated in this position, the dissectate 104 will fall into the well 106 close to the center 302 of the well 106.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Laser microdissection system
- 102: Sample
- 104: Dissectate
- 106: Well
- 108: Collection arrangement
- 110: Microscope
- 112: Optical detection system
- 114: Objective
- 116: Tube lens
- 118: Detector
- 120: Sample space
- 122: Beam splitter
- 124: Illumination system
- 126: Laser light source
- 128: Scanning unit
- 130: Prism
- 132: Drive unit
- 134: Dissection unit
- 136: Sample positioning unit
- 138: Well positioning unit
- 140: Controller
- 142: Input unit
- 144: Output unit
- 146: External interface
- 300: Field of view
- 302: Center
- 304: Outline
- D: Arrow

## Claims

1. A laser microdissection system (100), comprising
a microscope (110) having an objective (114) directed at a sample space (120);
a laser light source (126) configured to generate a manipulation light beam;
a dissection unit (134) configured to couple the manipulation light beam into the microscope (110), and to separate a dissectate (104) from a sample (102) arranged in the sample space (120) by directing the manipulation light beam onto the sample (102) according to outline data relating to an outline (304) on the sample (102) surrounding the dissectate (104);
a well positioning unit (138) configured to move a collection arrangement (108) comprising at least one well (106) arranged below the sample (102) relative to an optical axis (O) of the objective (114), wherein the well (106) is configured to capture the dissectate (104); and
a controller (140) configured to control the well positioning unit (138) to move the collection arrangement (108) based on the outline data such that a center (302) of an opening of the well (106) is arranged below the dissectate (104).

2. The laser microdissection system (100) according to claim 1, wherein the controller (140) is configured to control the dissection unit (134) to cut the sample (102) along the outline (304) after the well (106) has been positioned.

3. The laser microdissection system (100) according to claim 1 or 2, wherein the controller (140) is configured to determine an area of the sample (102) enclosed by the outline (304) based on the outline data, and to control the well positioning unit (138) to move the collection arrangement (108) such that the center (302) of the opening of the well (106) is arranged below the area of the sample (102) enclosed by the outline (304).

4. The laser microdissection system (100) according to any one of the preceding claims, wherein the controller (140) is configured to determine a center of the outline (304) based on the outline data, and to control the well positioning unit (138) to move the collection arrangement (108) such that the center (302) of the opening of the well (106) is arranged below the center of the outline (304).

5. The laser microdissection system (100) according to any one of the preceding claims, comprising a sample positioning unit (136) configured to move the sample (102) relative to the optical axis (O) of the objective (114).

6. The laser microdissection system (100) according to claim 5, wherein the controller (140) is configured to control the sample positioning unit (136) to move the sample (102) based on the outline data.

7. The laser microdissection system (100) according to any one of the preceding claims, wherein the cutting unit comprises a scanning unit (128) configured to move the manipulation light beam within a field of view (300) of the objective (114).

8. The laser microdissection system (100) according to claim 7, wherein the scanning unit (128) comprises two prisms (130) which are arranged rotatably around an optical axis (O') between the laser light source (126) and the objective (114).

9. The laser microdissection system (100) according to claim 7 or 8, wherein the laser light source (126) comprises at least one pulsed laser.

10. The laser microdissection system (100) according to any one of the preceding claims, wherein the laser microdissection system (100) comprises an input unit (142) configured to receive a user input, and wherein the controller (140) is configured to generate the outline data based on the user input.

11. The laser microdissection system (100) according to any one of the preceding claims, wherein the controller (140) is configured to receive the outline data via at least one of a data storage device and a computer network.

12. The laser microdissection system (100) according to any one of the preceding claims, wherein the controller (140) is configured to generate the outline data based on images captured with the microscope (110).

13. The laser microdissection system (100) according to any one of the preceding claims, wherein the controller (140) is configured to generate the outline data using machine learning.

14. A method for laser microdissection, comprising the following steps:
a) providing outline data relating to an outline (304) on a sample (102) surrounding a dissectate (104) to be separated the sample (102);
b) providing a collection arrangement (108) comprising at least one well (106) arranged below the sample (102);
c) positioning the collection arrangement (108) based on the outline data such that a center (302) of an opening of the well (106) is arranged below the dissectate (104);
d) separating the dissectate (104) from the sample (102) by directing the manipulation light beam onto the sample (102) according to the outline data; and
e) capturing the dissectate (104) using the well (106) of the collection arrangement (108).

15. The method according to claim 14, wherein the outline data comprises at least two outlines (304) on the sample (102), the collection arrangement (108) comprises at least two wells (106), and the steps c) to e) are repeated consecutively for each of the outlines (304) on the sample (102) using different wells (106) of the collection arrangement (108) to capture the respective dissectate (104).
